# EUROPÄISCHE PATENTSCHRIFT

(11) **EP 2 216 615 B1**
(45) Veröffentlichungstag und Bekanntmachung des Hinweises auf die Patenterteilung: **26.11.2014**
(21) Anmeldenummer: 10000508.1
(22) Anmeldetag: 20.01.2010
(51) Int. Cl.: F28F 1/40, B21C 37/20, B21D 17/04

(54) **Wärmeübertragerrohr und Verfahren zu dessen Herstellung**
Heat transfer tube and method for its production
Tube de transfert de chaleur et procédé destiné à sa fabrication

(30) Priorität: 04.02.2009 DE 102009007446
(43) Veröffentlichungstag der Anmeldung: 11.08.2010
(73) Patentinhaber: Wieland-Werke AG, 89079 Ulm (DE)
(72) Erfinder: Beutler, Andreas Dr., 89264 Weißenhorn (DE); El Hajal, Jean Dr., 89077 Ulm (DE); Lutz, Ronald, 89143 Blaubeuren (DE)

(56) Entgegenhaltungen:
- EP-B1- 1 061 318
- EP-B1- 1 544 563
- WO-A2-2006/105002
- JP-A- 4 100 633
- JP-A- 5 106 991
- JP-A- 5 253 614
- JP-A- 59 202 397
- US-A- 4 733 698

## Beschreibung

Die Erfindung betrifft ein Wärmeübertragerrohr gemäß dem Oberbegriff des Anspruchs 1 und ein Verfahren zu dessen Herstellung gemäß dem Oberbegriff des Anspruchs 6.

Verdampfung von Stoffen tritt in vielen Bereichen der Kälte- und Klimatechnik sowie in der Chemie-, Prozess- und Energietechnik auf. Zur Verdampfung benötigt der verdampfende Stoff Wärme, die einem anderen Medium entzogen wird. Das andere Medium kühlt sich dabei ab oder es kondensiert. Mischformen von Abkühlung und Kondensation können auch auftreten.

Es ist bekannt, dass durch die Strukturierung der Wärmeübertragungsfläche die Wärmeübertragung intensiviert werden kann. Damit kann erreicht werden, dass pro Einheit der Wärmeübertragungsfläche mehr Wärme übertragen werden kann als bei einer glatten Oberfläche. Ferner ist es möglich, die treibende Temperaturdifferenz zu reduzieren und damit den Prozess effizienter zu gestalten. Bei metallischen Wärmeaustauscherrohren erfolgt die Strukturierung der Wärmeübertragungsfläche häufig durch das Formen von Rippen oder ähnlichen Elementen aus dem Material der Rohrwand. Diese integral geformten Rippen haben einen festen metallischen Verbund mit der Rohrwand und können somit Wärme optimal übertragen.

Auf der Innenseite von Rohren werden oft achsparallele oder helixförmige Rippen zur Verbesserung der Wärmeübertragungseigenschaften eingesetzt. Durch die Berippung wird die Innenoberfläche des Rohres vergrößert. Bei helixförmig angeordneten Rippen wird ferner die Turbulenz des im Rohr strömenden Fluids erhöht und somit die Wärmeübertragung verbessert. Wenn das im Rohr strömende Fluid verdampft werden soll, dann werden die Innenrippen mit zusätzlichen Strukturmerkmalen versehen, um den Verdampfungsprozess günstig zu beeinflussen. Häufig werden dabei Hohlräume oder hinterschnittene Strukturen erzeugt, da solche Strukturen den Prozess der Blasenbildung begünstigen.

Durch Strukturieren der Innenoberfläche von Rohren wird nicht nur die Wärmeübertragung intensiviert, sondern auch der Druckabfall des im Rohr strömenden Mediums vergrößert. Dieser Effekt ist unerwünscht, insbesondere bei Verdampfungsprozessen, da mit dem Druck die Verdampfungstemperatur abnimmt und somit der gesamte Prozess weniger effizient wird.

In der Druckschrift JP 59202397 A wird vorgeschlagen, die Spitzen der Innenrippen so umzubiegen, dass zwischen benachbarten Rippen ein Kanal entsteht, dessen Öffnung enger ist als seine maximale Weite. Ähnliche Ausführungsformen sind den Schriften EP 1 061 318 B1 und JP 05106991 A zu entnehmen. In den beiden letztgenannten Schriften wird dabei nicht nur die Spitze der Innenrippen verformt, sondern die ganze Rippe umgebogen. In EP 1 544 563 B1 wird vorgeschlagen, die Rippenspitze derart zu verformen, dass die Rippen einen T-förmigen Querschnitt erhalten und somit zwischen den Rippen hinterschnittene Kanäle entstehen. Alle vier genannten Schriften haben gemeinsam, dass sich der Querschnitt und die Öffnungsweite der hinterschnittenen Kanäle nicht verändern. Folglich gibt es in einer derartigen Struktur keinen Ort, der für die Bildung und Ablösung von Blasen bevorzugt ist.

WO 2006/105 002 A2 offenbart ein weiteres bekanntes Wärmeübertragerrohr.

Für die Bildung und Stabilisierung von Blasenverdampfung günstiger sind hinterschnittene Strukturen, deren Querschnittsform und Öffnungsweite sich verändert. Eine Struktur mit sich verändernder Öffnungsweite wird beispielsweise in der Druckschrift JP 05253614 A beschrieben. Material wird von den Flanken der Innenrippen so verlagert, dass der Kanal zwischen den Rippen abschnittsweise verschlossen wird. An den offenen Stellen des Kanals können Dampfblasen entweichen. Die Größe der Öffnungen kann jedoch nur sehr schlecht kontrolliert werden und der Herstellungsprozess ist nicht stabil. Damit ist diese Struktur nicht geeignet für eine kostengünstige und leistungsstabile Herstellung von Rohren.

Des Weiteren beschreibt die Druckschrift US 4,733,698 eine Struktur, bei der Material aus dem oberen Bereich der Rippe durch radiales Einprägen von sekundären Nuten symmetrisch verlagert wird. Die primäre Nut zwischen den Rippen wird durch das verlagerte Material im Bereich der sekundären Nuten verschlossen. Dadurch entstehen tunnelartige Abschnitte. Damit zum Verschließen der primären Nut genügend Material verlagert wird, muss die sekundäre Nut einen scharf berandeten, trapezförmigen Querschnitt haben. Durch die scharfe Berandung entsteht eine Struktur mit ausgeprägten Kanten, die den Druckabfall des strömenden Mediums in unerwünschter Weise erhöhen. In JP 04100633 A wird eine sehr ähnliche Struktur vorgeschlagen. Wesentlicher Unterschied zur US 4,733,698 ist das Herstellungsverfahren. Während in US 4,733,698 ein Rohr mittels eines mehrstufigen Zieh- und Formprozesses bearbeitet wird, wird in JP 04100633 A zunächst ein Band strukturiert, welches anschließend zu einem Rohr eingeformt und an der Längsnaht verschweißt wird. Durch den anderen Herstellungsprozess werden jedoch die nachteilhaften Eigenschaften der Struktur nicht beseitigt.

Aufgabe der Erfindung ist es, die innere Oberfläche eines Rohres mit einer Struktur zu versehen, die den Wärmeübergang beim Verdampfen des auf der Innenseite des Rohres strömenden Mediums wesentlich verbessert und gleichzeitig den Druckabfall nicht übermäßig erhöht. Ferner soll die Struktur kostengünstig und sicher herstellbar sein.

Die Erfindung wird bezüglich eines Wärmeübertragerrohrs durch die Merkmale des Anspruchs 1 und bezüglich eines Verfahrens zur Herstellung eines Wärmeübertragerrohrs durch die Merkmale des Anspruchs 6 wiedergegeben. Die weiteren rückbezogenen Ansprüche betreffen vorteilhafte Aus- und Weiterbildungen der Erfindung.

Die Erfindung schließt ein Wärmeübertragerrohr ein mit einer Rohrachse, einer Rohrwandung mit einer Rohraußenseite und einer Rohrinnenseite, wobei auf der Rohrinnenseite aus der Rohrwandung achsparallele oder helixförmig umlaufende Innenrippen mit zwischen jeweils benachbarten Innenrippen liegender Nut geformt sind, wobei der gegen die Rohrachse gemessene Helixwinkel der Innenrippen kleiner oder gleich 45° ist, der von der Rohrwandung entfernte Bereich der Innenrippen in regelmäßigen Intervallen einseitig asymmetrisch im Wesentlichen in Rohrumfangsrichtung verformt ist, wobei das verformte Material der Innenrippen Auskragungen über der Nut ausbildet, sich die Auskragungen jeweils über eine endliche Verformungszone entlang einer Innenrippe erstrecken, sich innerhalb der Verformungszone die Ausprägung der Verformung kontinuierlich ändert, wobei die Verformung in der Mitte der Verformungszone stärker als an den Rändern ausgeprägt ist, und sich zwischen dem Nutengrund, den Seiten der Innenrippen und den gebildeten Auskragungen Hohlräume befinden, die die Bildung von Blasen begünstigen.

Die Erfindung geht dabei von der Überlegung aus, insbesondere bei einem metallischen Wärmeübertragerrohr mit einer integral ausgeformten Struktur auf der Rohrinnenseite, die Leistungsfähigkeit bei der Verdampfung von Stoffen auf der Rohrinnenseite zu verbessern.

Der verdampfende Stoff und das Wärme abgebende Medium müssen üblicherweise stofflich durch eine Wärme übertragende Wand voneinander getrennt sein. Zu diesem Zweck werden häufig Metallrohre verwendet. Der verdampfende Stoff kann sich auf der Rohraußenseite befinden, während das Wärme abgebende Medium auf der Rohrinnenseite strömt. Alternativ strömt der verdampfende Stoff auf der Rohrinnenseite und das Wärme abgebende Medium befindet sich auf der Außenseite des Rohres. Die vorliegende Erfindung bezieht sich auf den letztgenannten Fall.

Bei Verdampfung auf der Rohrinnenseite können die Rohre waagrecht oder senkrecht angeordnet sein. Ferner gibt es Fälle, in denen die Rohre geringfügig gegenüber der Waagrechten oder Senkrechten geneigt sind. In der Kältetechnik werden üblicherweise Verdampfer mit horizontalen Rohren eingesetzt. Dagegen werden in der Chemietechnik zur Beheizung von Destillationskolonnen häufig vertikale Umlaufverdampfer verwendet. Die Verdampfung des Stoffes findet dabei auf der Innenseite von senkrecht stehenden Rohren statt.

Um den Wärmetransport zwischen dem Wärme abgebenden Medium und dem verdampfenden Stoff zu ermöglichen, muss die Temperatur des Wärme abgebenden Mediums höher sein als die Temperatur des verdampfenden Stoffs. Diesen Temperaturunterschied bezeichnet man als treibende Temperaturdifferenz. Je höher die treibende Temperaturdifferenz ist, desto mehr Wärme kann übertragen werden. Andererseits ist man oft bestrebt, die treibende Temperaturdifferenz klein zu halten, da dies Vorteile für die Effizienz des Prozesses hat.

Erfindungsgemäß wird zur Erhöhung des Wärmeübergangskoeffizienten bei der Verdampfung der Vorgang des Blasensiedens intensiviert. Die Bildung von Blasen beginnt an Keimstellen. Diese Keimstellen sind meist kleine Gas- oder Dampfeinschlüsse. Wenn die anwachsende Blase eine bestimmte Größe erreicht hat, löst sie sich von der Oberfläche ab. Wird im Zuge der Blasenablösung die Keimstelle mit Flüssigkeit geflutet, dann wird die Keimstelle deaktiviert. Die Oberfläche muss also derart gestaltet werden, dass beim Ablösen der Blase eine kleine Blase zurück bleibt, die dann als Keimstelle für einen neuen Zyklus der Blasenbildung dient. Dies wird erreicht, indem man auf der Oberfläche Kavitäten anordnet, in denen nach Ablösung der Blase eine kleine Blase zurück bleiben kann.

In der vorliegenden Erfindung stellen die Hohlräume, die zwischen dem Nutengrund, den Seiten der Rippen und den geformten Auskragungen gebildet werden, die erfindungsgemäßen Kavitäten dar. Die Auskragungen werden durch zonenweises Verformen der oberen Rippenbereiche gebildet. Die Verformung ist dabei so ausgeführt, dass sich innerhalb einer Zone die Ausprägung der Verformung kontinuierlich ändert, wobei die Verformung in der Mitte der verformten Zone stärker ausgeprägt ist als an den Rändern der verformten Zone. Dadurch entsteht eine Kontur mit gekrümmten Begrenzungsflächen und ohne ausgeprägte Kanten. Eine derartige Kontur ist günstig im Hinblick auf einen geringen Druckabfall, denn die Strömung des Fluids wird nicht abrupt an Kanten umgelenkt, sondern das Fluid kann entlang der gekrümmten Begrenzungsflächen strömen.

Der besondere Vorteil besteht darin, dass die innere Oberfläche eines Rohres mit einer Struktur versehen ist, die den Wärmeübergang beim Verdampfen des auf der Innenseite des Rohres strömenden Mediums wesentlich verbessert und gleichzeitig den Druckabfall nicht übermäßig erhöht. Ferner ist die Struktur kostengünstig und sicher herstellbar.

In bevorzugter Ausgestaltung der Erfindung kann in der Mitte der Verformungszone das verformte Material einer Innenrippe die in Umfangsrichtung benachbarte Innenrippe berühren. Hierdurch wird die Nut zwischen jeweils benachbarten Rippen abschnittsweise mit einem Deckel versehen. Aus der zunächst offenen Nut wird also lokal ein sich parallel zu den Innenrippen erstreckender, an zwei Seiten offener Hohlraum gebildet, der durch den Nutengrund, die Flanken der beiden angrenzenden Innenrippen und den geformten Deckel begrenzt wird. Der Querschnitt dieses Hohlraums ändert sich entlang der Innenrippen in der Art, dass der Hohlraum an beiden Enden trichterartig in die offene Nut übergeht. Zwischen den beiden trichterförmigen Übergängen besitzt der Hohlraum eine Stelle mit kleinstem Querschnitt. An dieser Stelle können sich bevorzugt kleine Blasen oder Gaseinschlüsse aufhalten. Diese bilden bevorzugte Keimstellen zur Bildung großer Blasen, wodurch der Verdampfungsprozess beschleunigt wird.

Vorteilhafterweise kann in der Mitte der Verformungszone das verformte Material den Nutengrund zwischen den Innenrippen und die in Umfangsrichtung benachbarte Innenrippe berühren, wodurch die Nut zwischen benachbarten Innenrippen abschnittsweise verschlossen ist. Durch das abschnittsweise Verschließen entstehen trichterartige Hohlräume, die die Bildung von Blasen besonders begünstigen. Da die bei dieser Ausführungsform gebildeten Hohlräume lediglich eine Öffnung haben, kann Flüssigkeit nicht ungehindert nachströmen, wenn sich eine Blase abgelöst hat. Dadurch werden Bedingungen geschaffen, die das Zurückbleiben kleiner Blasen oder Gaseinschlüsse besonders begünstigen. Diese kleinen Blasen oder Gaseinschlüsse bilden bevorzugte Keimstellen für die Entstehung neuer Blasen bereits bei kleinen treibenden Temperaturdifferenzen.

In bevorzugter Ausgestaltung berühren oder überlappen sich benachbarte Auskragungen der Innenrippen in helixförmiger Umlaufrichtung nicht. Die Breite der verformten Zone ist üblicherweise so gewählt, dass zwischen den benachbarten Zonen der Auskragungen die ursprüngliche Höhe H der Innenrippe erhalten bleibt. Dies begünstigt die Verwirbelung des im Rohr strömenden Fluids.

Vorteilhafterweise können auf der Rohraußenseite helixförmig umlaufende, integral geformte Außenrippen ausgebildet sein. Bei derartig beidseitig berippten Rohrtypen wird die Wärmeübertragungsfläche gesteigert, so dass entsprechend mehr Wärme übertragen werden kann als bei einer glatten Oberfläche.

Ein weiterer Aspekt der Erfindung schließt ein Verfahren zur Herstellung eines erfindungsgemäßen Wärmeaustauscherrohrs ein, mit auf der Rohraußenseite schraubenlinienförmig umlaufenden integralen Außenrippen und auf der Rohrinnenseite achsparallel oder schraubenlinienförmig verlaufenden, integralen Innenrippen, deren von der Rohrwandung entfernter Bereich in regelmäßigen Intervallen einseitig asymmetrisch in Rohrumfangsrichtung verformt ist, wobei folgende Verfahrensschritte durchlaufen werden:
a) Auf der Rohraußenseite eines Glattrohres werden schraubenlinienförmig verlaufende Außenrippen geformt, indem das Rippenmaterial durch Verdrängen von Material aus der Rohrwandung mittels eines Walzschritts gewonnen wird und das entstehende Rippenrohr durch die Walzkräfte in Drehung versetzt und entsprechend den entstehenden Rippen vorgeschoben wird, wobei die Außenrippen mit ansteigender Höhe aus dem sonst unverformten Glattrohr ausgeformt werden,
b) die Rohrwandung wird in dem Bereich, in dem die Außenrippen geformt werden, durch einen im Rohr liegenden Walzdorn abgestützt, der an einer Dornstange drehbar gelagert ist und auf seiner Dornaußenfläche achsparallele oder helixförmige Nuten aufweist, wobei achsparallele oder helixförmige Innenrippen geformt werden,
c) der von der Rohrwandung entfernte Bereich der Innenrippen wird durch mindestens einen dem Walzdorn nachgeschalteten, nicht drehbaren Stift in regelmäßigen Intervallen asymmetrisch im Wesentlichen in Rohrumfangsrichtung verformt, wobei das verformte Material der Innenrippen derart verlagert wird, dass es Auskragungen über der Nut zwischen zwei benachbarten Innenrippen bildet.

Die Erfindung geht dabei von der Überlegung aus, dass eine Walzvorrichtung verwendet wird, die aus n = 3 oder 4 Werkzeughaltern besteht, in die jeweils mindestens ein Walzwerkzeug integriert ist. Die Achse jedes Werkzeughalters verläuft schräg zur Rohrachse. Die Werkzeughalter sind jeweils um 360°/n versetzt am Umfang des Rohres angeordnet. Die Werkzeughalter sind radial zustellbar. Sie sind ihrerseits in einem ortsfesten Walzgerüst angeordnet. Die Walzwerkzeuge bestehen aus mehreren nebeneinander angeordneten Walzscheiben, deren Durchmesser in Richtung des fortschreitenden Umformungsgrads der Außenrippen ansteigt.

Ebenfalls Bestandteil der Vorrichtung ist ein profilierter Walzdorn. Dieser ist an einer Stange angebracht und auf dieser drehbar gelagert. Die Achse des Walzdorns ist identisch mit der Achse der Stange und fällt mit der Rohrachse zusammen. Die Stange ist an ihrem anderen Ende am Walzgerüst befestigt und so fixiert, dass sie sich nicht drehen kann. Mittels der Stange wird der Walzdorn im Arbeitsbereich der Walzwerkzeuge positioniert.

Ferner ist nach dem Walzdorn mindestens ein in Radialrichtung ausgerichteter Stift angebracht. Der Stift ist fest mit der Stange verbunden und folglich nicht drehbar. So greift der nicht drehbare Stift in die Innenrippen, die zunächst von der Walzdornaußenoberfläche ausgebildet werden, wodurch Auskragungen entstehen. Diese Auskragungen sind in regelmäßigen Intervallen asymmetrisch im Wesentlichen in Rohrumfangsrichtung ausgeformt. In diesem Zusammenhang bringt der Begriff im Wesentlichen zum Ausdruck, dass die an der Rohraußenwand angreifenden Walzscheiben des Walzwerkzeugs dem Rohr pro Umdrehung einen gewissen, jedoch geringen Vorschub geben. So führt der an der Dornstange angeordnete ortsfeste Stift bei ausgesprochen geringer axialer Verschiebung im Wärmeübertragerrohr eine Bewegung durch, die der Rohrumfangsrichtung nährungsweise entspricht.

In bevorzugter Ausgestaltung der Erfindung kann das Ende des Stiftes eine abgerundete Kontur aufweisen. Entsprechend der Kontur des Stiftes ändert sich die Ausprägung der Verformung, so dass Bereiche mit starker und weniger starker Verformung existieren. Durch die verrundete Kontur wird vermieden, dass die gebildeten Auskragungen beim Übergang von Bereichen unterschiedlich starker Verformung scharfe Kanten aufweisen.

Vorteilhafterweise kann das Ende des Stiftes die Form einer Halbkugel aufweisen. Entsprechend dieser Halbkugelform ändert sich die Ausprägung der Verformung innerhalb einer Verformungszone kontinuierlich, ohne dass scharfe Kanten entstehen. Ähnlich einer Mulde ist die Verformung in der Mitte der verformten Zone stärker ausgeprägt als an deren Rändern. Die Auskragungen nehmen dadurch eine zungenartige Form an.

In weiterer bevorzugter Ausgestaltung der Erfindung kann die radiale Erstreckung des Stiftes, gemessen von der Achse der Stange bis zum Ende des Stiftes, maximal so groß sein wie der halbe Durchmesser des Walzdorns. Durch diese Limitierung wird vermieden, dass sich die Verformung der Innenrippen bis in die Kernwand des Rippenrohres erstreckt und so die Stabilität des Rohres reduziert wird. Je kleiner die radiale Erstreckung des Stiftes ist, desto weniger werden die Innenrippen verformt und desto weniger Material wird seitlich verdrängt. Durch die Auswahl der radialen Erstreckung des Stiftes kann also die Intensität der Verformung wesentlich beeinflusst werden.

Vorteilhafterweise kann die radiale Erstreckung des Stiftes, gemessen von der Achse der Stange bis zum Ende des Stiftes, um 35 % bis 65 % der Höhe der unverformten Innenrippen kleiner sein als der halbe Dorndurchmesser des Walzdorns. Bei Innenrippenhöhen von beispielsweise 0,4 mm kann die radiale Erstreckung des Stiftes, gemessen von der Achse der Stange bis zum Ende des Stiftes, also um 0,14 bis 0,26 mm kleiner sein als der halbe Durchmesser des Walzdorns. Ist die radiale Erstreckung des Stiftes kleiner als der halbe Dorndurchmesser abzüglich 65 % der Höhe der unverformten Innenrippen, dann ist die Verformung der Innenrippen zu wenig ausgeprägt, so dass sich keine ausreichende Verbesserung des Wärmeübergangs erzielen lässt. Ist die radiale Erstreckung des Stiftes kleiner als der halbe Dorndurchmesser abzüglich 35 % der Höhe der unverformten Innenrippenhöhe, dann ist die Verformung der Innenrippen dergestalt, dass die entstehenden Hohlräume eine für die Bildung von Blasenkeimstellen besonders vorteilhafte Form aufweisen.

Zur Bearbeitung des Rohres werden die am Umfang angeordneten, rotierenden Walzwerkzeuge auf das Glattrohr radial zugestellt und mit dem Glattrohr in Eingriff gebracht. Das Glattrohr wird dadurch in Drehung um seine Achse versetzt. Da die Achsen der Walzwerkzeuge zur Rohrachse schräg gestellt sind, formen die Walzwerkzeuge schraubenlinienförmig umlaufende Außenrippen aus dem Wandmaterial des Glattrohrs und schieben gleichzeitig das entstehende Rippenrohr entsprechend der Steigung der schraubenlinienförmig umlaufenden Außenrippen vor. Der längs zur Rohrachse gemessene Abstand der Mitten zweier benachbarter Außenrippen wird als Rippenteilung p bezeichnet. Die Rippenteilung p beträgt üblicherweise zwischen 0,4 und 2,2 mm. Die Außenrippen laufen vorzugsweise wie ein mehrgängiges Gewinde um. Werden pro Umdrehung des Rohres m Gewindegänge erzeugt, dann beträgt der Rohrvorschub in Achsrichtung pro Umdrehung m·p. Bei kleinen Teilungen p der Außenrippe nimmt m üblicherweise die Werte 3, 4, 6 oder 8 an.

Im Arbeitsbereich der Walzwerkzeuge wird die Rohrwand durch den profilierten Walzdorn unterstützt. Das Profil des Walzdorns besteht üblicherweise aus einer Vielzahl von im Wesentlichen trapezförmigen Nuten, die parallel zueinander auf der Außenfläche des Walzdorns angeordnet sind. Die Nuten verlaufen unter einem Drallwinkel von 0° bis 45° zur Achse des Walzdorns. Durch die radialen Kräfte des Walzwerkzeugs wird das Material der Rohrwand in die Nuten des Walzdorns gepresst. Dadurch werden achsparallele bzw. schraubenlinienförmig umlaufende Innenrippen auf der Innenoberfläche des Rohres geformt. Der gegen die Rohrachse gemessene Drallwinkel der Innenrippen ist gleich dem Drallwinkel der Nuten des Walzdorns. Die von der Rohrwand aus gemessene Höhe H der Innenrippen beträgt vorzugsweise zwischen 0,3 und 0,5 mm. Zwischen zwei benachbarten Innenrippen verlaufen Nuten.

Nach dem Arbeitsbereich der Walzwerkzeuge werden die Innenrippen durch den hinter dem Walzdorn angebrachten Stift weiter bearbeitet. Der Stift ist durch die Stange ortsfest positioniert, während das Rohr mit den geformten Innenrippen um seine eigene Achse rotiert. Die radiale Erstreckung des Stiftes ist so gewählt, dass der von der Rohrwand entfernte Bereich der Innenrippen durch das in Radialrichtung weisende Ende des Stiftes in regelmäßigen Intervallen asymmetrisch im Wesentlichen in Rohrumfangsrichtung verformt wird. Das Material der Innenrippen wird seitlich verlagert und die Höhe der Innenrippen wird durch die Verformung lokal reduziert. Das seitlich verlagerte Material der Innenrippen bildet Auskragungen über der Nut zwischen zwei benachbarten Innenrippen. Entsprechend der Breite des Stiftes erstreckt sich die Verformung jeweils über eine endliche Zone entlang der Innenrippe. Da das Ende des Stiftes eine verrundete Kontur hat, ändert sich die Ausprägung der Verformung innerhalb einer Zone kontinuierlich. Ähnlich einer Mulde ist die Verformung in der Mitte der verformten Zone stärker ausgeprägt als an deren Rändern. Verwendet man lediglich einen Stift zur Verformung der Innenrippen, dann ist der in Achsrichtung gemessene Abstand der Mitten zweier benachbarter Verformungszonen entlang einer Innenrippe gleich dem axialen Vorschub (m·p), den das Rohr pro Umdrehung vollzieht. Bei Verwendung mehrerer Stifte ist dieser Abstand gemäß der Anzahl der Stifte reduziert.

Ausführungsbeispiele der Erfindung werden anhand schematischer Zeichnungen näher erläutert.

Darin zeigen:
- Fig. 1: eine Ansicht der Struktur auf der Rohrinnenseite eines flach ausgebreiteten Rohrsegments,
- Fig. 2: eine Detailansicht der Innenstruktur eines Rohrsegments gemäß Fig. 1,
- Fig. 3: die Herstellung eines beidseitig berippten Wärmeübertragerrohrs mittels eines Walzdorns und vier äußeren Walzwerkzeugen,
- Fig. 4: die Herstellung eines beidseitig berippten Wärmeübertragerrohrs gemäß Fig. 3 aus einer weiteren Perspektive,
- Fig. 5: einen drehbar gelagerten Walzdorn mit nicht drehbarem Stift,
- Fig. 6: eine Detailansicht im Bereich der äußeren Walzwerkzeuge,
- Fig. 7: eine weitere Detailansicht im Bereich des Stiftes, und
- Fig. 8: eine Ansicht eines halbseitig aufgeschnittenen beidseitig berippten Wärmeübertragerrohrs mit unterschiedlichen Stadien der Herstellung der Innenstruktur.

Einander entsprechende Teile sind in allen Figuren mit denselben Bezugszeichen versehen.

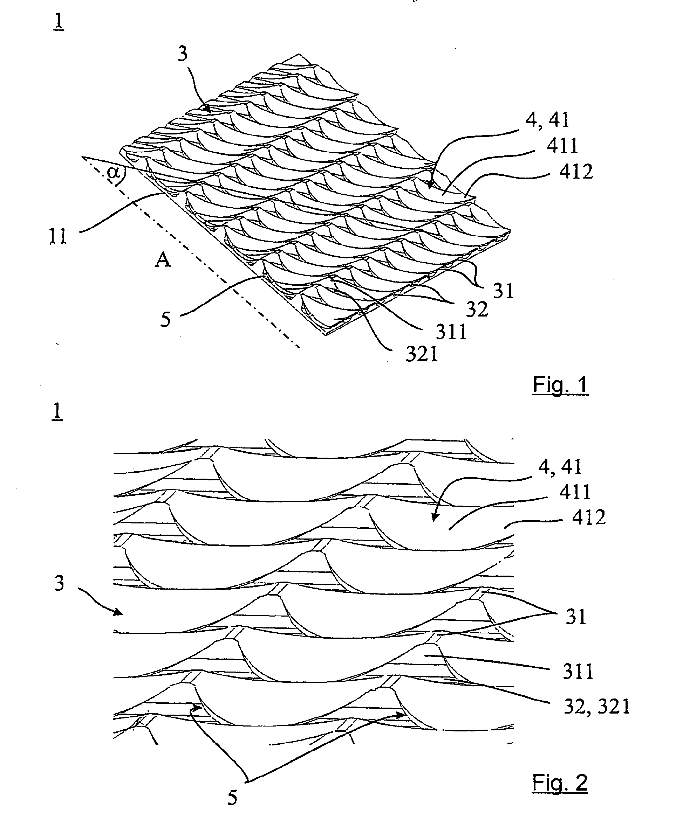

Fig. 1 zeigt eine Ansicht der Struktur auf der Rohrinnenseite 3 eines flach ausgebreiteten Rohrsegments eines Wärmeübertragerrohrs 1. Die Rohrachse A verläuft in diesem Fall parallel zu einer der Schnittkanten des Rohrsegments. Der gegen die Rohrachse A gemessene Helixwinkel α der Innenrippen 31 beträgt ungefähr 35°. Der von der Rohrwandung 11 entfernte Bereich der Innenrippen 31, also im Wesentlichen der Bereich der Rippenspitzen, ist in regelmäßigen Intervallen einseitig asymmetrisch in Rohrumfangsrichtung verformt. Das verformte Material der Innenrippen 31 bildet Auskragungen 4, die sich über der Nut 32 erstrecken. An den Rändern 412 der Verformungszonen 41 verbleibt zwischen benachbarten Auskragungen 4 ein kleiner Rest einer Innenrippe 31 unverformt, so dass benachbarte Auskragungen 4 der Innenrippen 31 in helixförmiger Umlaufrichtung ein wenig beabstandet sind und sich nicht berühren.

In der Mitte 411 der Verformungszone 41 einer Auskragung 4 berührt das verformte Material die in Umfangsrichtung benachbarte Innenrippe 31, wodurch die Nut 32 zwischen benachbarten Innenrippen 31 abschnittsweise verschlossen wird. Aus der ursprünglich offenen Nut 32 wird so lokal ein sich parallel zu den Innenrippen erstreckender, an zwei Seiten offener Hohlraum 5 gebildet, der durch den Nutengrund 321, die Seiten 311 der beiden angrenzenden Innenrippen 31 und der Auskragung 4 als Deckel begrenzt wird.

Auch kann sich in der Mitte 411 der Verformungszone 41 das verformte Material sogar bis zum Nutengrund 321 zwischen den Innenrippen 31 erstrecken, wodurch unter jeder Auskragung 4 quasi zwei durch eine Trennwand getrennte Hohlräume 5 entstehen.

Fig. 2 zeigt eine Detailansicht der Innenstruktur eines Rohrsegments eines Wärmeübertragerrohrs 1 gemäß Fig. 1. Auf der Rohrinnenseite 3 sind Innenrippen 31 mit über die Oberfläche verteilten regelmäßig wiederkehrenden Auskragungen 4 angeordnet, unter denen Hohlräume 5 ausgebildet sind. Im Inneren eines Hohlraums 5 wird die Blasenbildung begünstigt. Entstehende Blasenkeime müssen allerdings, durch eine Auskragung 4 begrenzt, entlang der Seiten 311 der Innenrippen 31 und entlang der Nut 32 am Nutengrund 321 lateral anwachsen, bevor sie sich über die nach Innen offenen Bereiche zwischen den Auskragungen 4 vom Wärmeübertragerrohr 1 über trichterartige Öffnungen ablösen können.

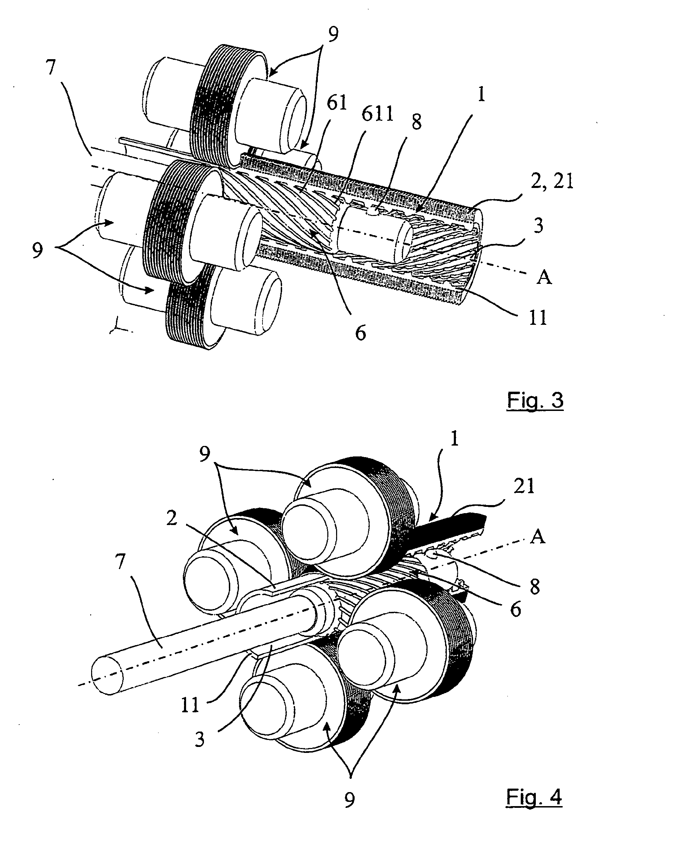

Der in Fig. 3 und 4 dargestellte Teil einer Vorrichtung verdeutlicht in unterschiedlichen Perspektiven die Herstellung eines beidseitig berippten Wärmeübertragerrohrs 1. Das integral gewalzte Wärmeübertragerrohr 1 weist auf der Rohraußenseite 2 schraubenlinienförmig umlaufende Außenrippen 21 auf. Es wird eine Vorrichtung verwendet, die aus vier Walzwerkzeugen 9 besteht, die am Umfang des Wärmeübertragerrohrs 1 angeordnet sind. Die Walzwerkzeuge 9 sind etwas gegenüber der Rohrachse A schräg angestellt, um den nötigen Rohrvorschub zu generieren, und können radial zugestellt werden. Sie sind ihrerseits in einem ortsfesten Walzkopf angeordnet, der seinerseits im Grundgerüst der Walzvorrichtung fixiert ist (in den Figuren nicht dargestellt).

Ebenfalls Bestandteil der Walzvorrichtung ist der Walzdorn 6, mit dessen Hilfe die Innenstruktur des Wärmeübertragerrohrs 1 erzeugt wird. Der Walzdorn 6 ist am freien Ende einer Dornstange 7 angebracht und drehbar gelagert. Die Dornstange 7 ist an ihrem anderen Ende am nicht in der Figur dargestellten Grundgerüst der Walzvorrichtung befestigt. Die Dornstange 7 muss mindestens so lang sein wie das herzustellende Wärmeübertragerrohr 1.

Zur Bearbeitung des ursprünglich glatten Rohres werden die am Umfang angeordneten, rotierenden Walzwerkzeuge 9 auf das Glattrohr radial zugestellt und mit dem Glattrohr in Eingriff gebracht. Das Glattrohr wird dadurch in Drehung versetzt. Da die Achse jedes der Walzwerkzeuge 9 zur Rohrachse schräg gestellt ist, formen die Walzwerkzeuge 9 schraubenlinienförmig umlaufende Außenrippen 21 aus der Rohrwandung 11 des Glattrohrs und schieben gleichzeitig das entstehende Wärmeübertragerrohr 1 entsprechend der Steigung der schraubenlinienförmig umlaufenden Außenrippen 21 vor.

In der Umformzone der Walzwerkzeuge 9 wird die Rohrwandung 11 durch den profilierten Walzdorn 6 gestützt. Die Achse des Walzdorns 6 ist identisch mit der Rohrachse A. Der Walzdorn 6 ist an der Dornaußenfläche 61 mit helixförmigen Nuten 611 profiliert. Am Ende der Dornstange 7 ist ein Stift 8 in Form einer Halbkugel angeordnet, dessen die radiale Erstreckung, gemessen von der Achse der Stange 7 bis zum äußeren Ende des Stiftes 81, maximal so groß ist wie der halbe Durchmesser des Walzdorns 6. Dieser Stift 8 greift in das Material der Innenrippen der Rohrinnenseite 3 ein und bildet im rotierenden Wärmeübertragerrohr 1 die in Fig. 1 bzw. 2 dargestellten Auskragungen 4.

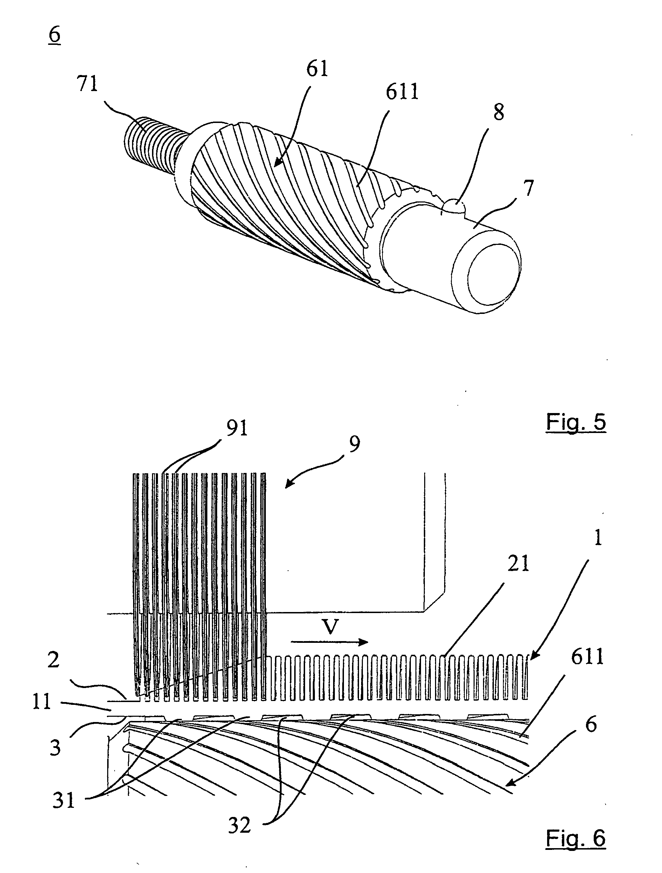

Fig. 5 zeigt einen drehbar gelagerten Walzdorn 6 mit nicht drehbarem Stift 8 am Ende einer zweiteiligen Dornstange 7. Das Gewinde 71 verbindet die Stangenteile formschlüssig zu einer für den Einsatz geeigneten, stabilen Konstruktion. Der Walzdorn 6 ist mit helixförmigen Nuten 611 profiliert. Das Profil besteht üblicherweise aus einer Vielzahl von trapezförmigen oder nahezu trapezförmigen Nuten, die parallel zueinander auf der Dornaußenfläche 61 mit einem Drall angeordnet sind. Beim dargestellten Walzdorn 6 beträgt der Drallwinkel ungefähr 35°.

Fig. 6 zeigt eine Detailansicht der Vorrichtung im Bereich der äußeren Walzwerkzeuge 9. Die Walzwerkzeuge 9 bestehen jeweils aus mehreren nebeneinander angeordneten Walzscheiben 91, deren Durchmesser in Vorschubrichtung V ansteigt. Durch die radialen Kräfte der Walzwerkzeuge 9 auf die Außenseite 2 wird das Material der Rohrwandung 11 auf der Rohrinnenseite 3 in die helixförmigen Nuten 611 des Walzdorns 6 gepresst. Dadurch werden schraubenlinienförmig umlaufende Innenrippen 31 auf der Innenfläche des Wärmeübertragerrohrs 1 geformt, bevor der verfahrensseitig nachfolgende Stift die Auskragungen formt (in dieser Figur nicht dargestellt). Zwischen zwei benachbarten Innenrippen 31 verlaufen Nuten 32.

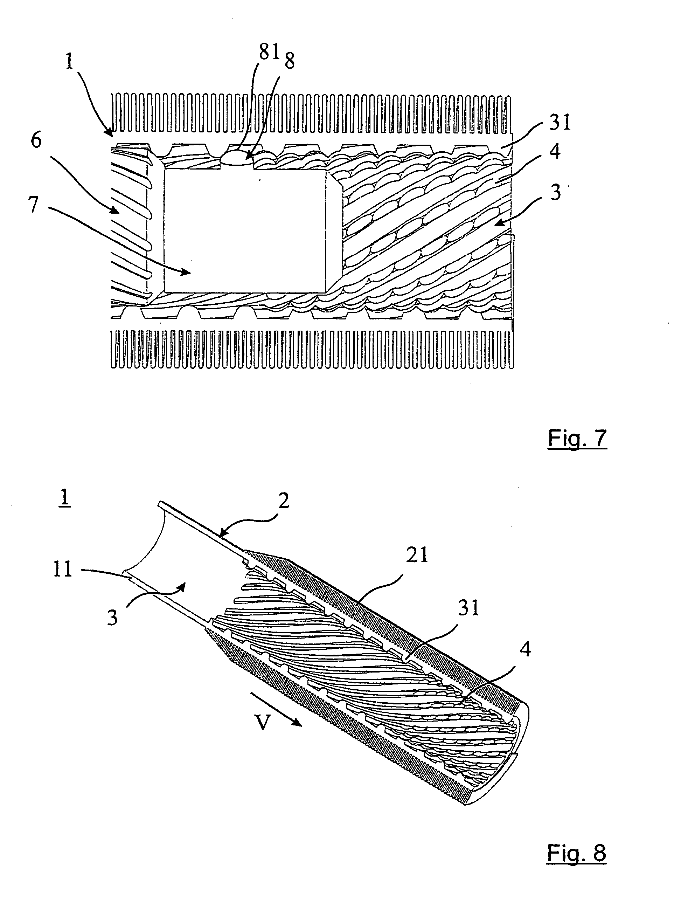

Fig. 7 zeigt eine weitere Detailansicht des Wärmeübertragerrohrs 1 und des Walzdorns 6 und das Ende der Dornstange 7 im Bereich des Stifts 8. Dort werden die vom Walzdorn 6 ausgebildeten Innenrippen 31 umgeformt, indem die Auskragungen 4 in die Rohrinnenseite 3 eingebracht werden. Der Stift 8 hat eine halbkugelförmige Gestalt, wobei die radiale Erstreckung Stiftes 8, gemessen von der Achse der Stange 7 bis zum Ende des Stiftes 81, kleiner ist als der halbe Durchmesser des Walzdorns 6. Bei Strukturen mit Innenrippenhöhen von beispielsweise 0,4 mm ist die radiale Erstreckung des Stiftes 8, gemessen von der Achse der Stange bis zum Ende des Stiftes 81 um 0,14 mm bis 0,26 mm kleiner als der halbe Durchmesser des Walzdorns 6.

Fig. 8 zeigt eine Ansicht eines halbseitig aufgeschnittenen beidseitig berippten Wärmeübertragerrohrs 1 mit unterschiedlichen Stadien der Herstellung der Struktur auf der Rohrinnenseite 3. Die aus der Rohrwandung 11 herausgearbeiteten Außenrippen 21 auf der Rohraußenseite 2 haben meist eine größere Rippenhöhe als die Innenrippen 31. In Vorschubrichtung V ist gut erkennbar, wie, ausgehend von einem Glattrohr, zunächst die Außenrippen 21 und Innenrippen 31 geformt werden und im weiteren Verfahrensverlauf die Auskragungen 4 ausgebildet werden.

### Bezugszeichenliste

- 1: Wärmeübertragerrohr
- 11: Rohrwandung
- 2: Rohraußenseite
- 21: Außenrippen
- 3: Rohrinnenseite
- 31: Innenrippen
- 311: Seiten der Innenrippen
- 32: Nut
- 321: Nutengrund
- 4: Auskragungen
- 41: Verformungszone
- 411: Mitte der Verformungszone
- 412: Ränder der Verformungszone
- 5: Hohlraum
- 6: Walzdorn
- 61: Dornaußenfläche
- 611: helixförmige Nuten
- 7: Dornstange
- 71: Gewinde einer zweiteiligen Dornstange
- 8: Stift
- 81: Ende des Stiftes
- 9: Walzwerkzeug
- 91: Walzscheiben
- A: Rohrachse
- V: Vorschubrichtung
- α: Helixwinkel

## Patentansprüche

1. Wärmeübertragerrohr (1) mit einer Rohrachse (A), einer Rohrwandung (11) mit einer Rohraußenseite (2) und einer Rohrinnenseite (3), wobei auf der Rohrinnenseite (3) aus der Rohrwandung (11) achsparallele oder helixförmig umlaufende Innenrippen (31) mit zwischen jeweils benachbarten Innenrippen (31) liegender Nut (32) geformt sind,
- wobei der gegen die Rohrachse (A) gemessene Helixwinkel (α) der Innenrippen (31) kleiner oder gleich 45° ist,
- wobei der von der Rohrwandung (11) entfernte Bereich der Innenrippen (31) in regelmäßigen Intervallen einseitig asymmetrisch im Wesentlichen in Rohrumfangsrichtung verformt ist, wobei das verformte Material der Innenrippen (31) Auskragungen (4) über der Nut (32) ausbildete, und
- wobei sich zwischen dem Nutengrund (321), den Seiten der Innenrippen (311) und den gebildeten Auskragungen (4) Hohlräume (5) befinden, die die Bildung von Blasen begünstigen, **dadurch gekennzeichnet,**
- **dass** sich die Auskragungen (4) jeweils über eine endliche Verformungszone (41) entlang einer Innenrippe (31) erstrecken,
- **dass** sich innerhalb der Verformungszone (41) die Ausprägung der Verformung kontinuierlich ändert, wobei die Verformung in der Mitte (411) der Verformungszone (41) stärker als an den Rändern (412) ausgeprägt ist

2. Wärmeübertragerrohr nach Anspruch 1, **dadurch gekennzeichnet, dass** in der Mitte (411) der Verformungszone (41) das verformte Material einer Innenrippe (31) die in Umfangsrichtung benachbarte Innenrippe (31) berührt.

3. Wärmeübertragerrohr nach Anspruch 2, **dadurch gekennzeichnet, dass** in der Mitte (411) der Verformungszone (41) das verformte Material den Nutengrund (321) zwischen den Innenrippen (31) und die in Umfangsrichtung benachbarte Innenrippe (31) berührt, wodurch die Nut (32) zwischen benachbarten Innenrippen (31) abschnittsweise verschlossen ist.

4. Wärmeübertragerrohr nach einem der Ansprüche 1 bis 3, **dadurch gekennzeichnet, dass** sich benachbarte Auskragungen (4) der Innenrippen (31) in helixförmiger Umlaufrichtung nicht berühren oder überlappen.

5. Wärmeübertragerrohr nach einem der Ansprüche 1 bis 4, **dadurch gekennzeichnet, dass** auf der Rohraußenseite (2) helixförmig umlaufende, integral geformte Außenrippen (21) ausgebildet sind.

6. Verfahren zur Herstellung eines Wärmeaustauscherrohrs (1) gemäß Anspruch 5, mit auf der Rohraußenseite (2) schraubenlinienförmig umlaufenden integralen Außenrippen (21) und auf der Rohrinnenseite (3) achsparallel oder schraubenlinienförmig verlaufenden, integralen Innenrippen (31), deren von der Rohrwandung (11) entfernter Bereich in regelmäßigen Intervallen einseitig asymmetrisch in Rohrumfangsrichtung verformt ist, **gekennzeichnet durch** folgende Verfahrensschritte:
a) Auf der Rohraußenseite (2) eines Glattrohres werden schraubenlinienförmig verlaufende Außenrippen (21) geformt, indem das Rippenmaterial durch Verdrängen von Material aus der Rohrwandung (11) mittels eines Walzschritts gewonnen wird und das entstehende Rippenrohr **durch** die Walzkräfte in Drehung versetzt und entsprechend den entstehenden Rippen vorgeschoben wird, wobei die Außenrippen (21) mit ansteigender Höhe aus dem sonst unverformten Glattrohr ausgeformt werden,
b) die Rohrwandung (11) wird in dem Bereich, in dem die Außenrippen (21) geformt werden, **durch** einen im Rohr liegenden Walzdorn (6) abgestützt, der an einer Dornstange (7) drehbar gelagert ist und auf seiner Dornaußenfläche (61) achsparallele oder helixförmige Nuten (611) aufweist, wobei achsparallele oder helixförmige Innenrippen (31) geformt werden,
c) der von der Rohrwandung (11) entfernte Bereich der Innenrippen (31) wird **durch** mindestens einen dem Walzdorn (6) nachgeschalteten, nicht drehbaren Stift (8) in regelmäßigen Intervallen asymmetrisch im Wesentlichen in Rohrumfangsrichtung verformt, wobei das verformte Material der Innenrippen (31) derart verlagert wird, dass es Auskragungen (4) über der Nut (32) zwischen zwei benachbarten Innenrippen (31) bildet.

7. Verfahren zur Herstellung eines Wärmeaustauscherrohrs nach Anspruch 6, **dadurch gekennzeichnet, dass** das Ende (81) des Stiftes (8) eine abgerundete Kontur aufweist.

8. Verfahren zur Herstellung eines Wärmeaustauscherrohrs nach Anspruch 7, **dadurch gekennzeichnet, dass** das Ende (81) des Stiftes (8) die Form einer Halbkugel aufweist.

9. Verfahren zur Herstellung eines Wärmeaustauscherrohrs nach einem der Ansprüche 6 bis 8, **dadurch gekennzeichnet, dass** die radiale Erstreckung des Stiftes (8), gemessen von der Achse der Stange (7) bis zum Ende des Stiftes (81), maximal so groß ist wie der halbe Durchmesser des Walzdorns (6).

10. Verfahren zur Herstellung eines Wärmeaustauscherrohrs nach einem der Ansprüche 6 bis 9, **dadurch gekennzeichnet, dass** die radiale Erstreckung des Stiftes (8), gemessen von der Achse der Stange (7) bis zum Ende des Stiftes (81), um 35 % bis 65 % der Höhe der unverformten Innenrippen kleiner ist als der halbe Durchmesser des Walzdorns (6).

11. Verfahren zur Herstellung eines Wärmeaustauscherrohrs nach Anspruch 10, **dadurch gekennzeichnet, dass** die radiale Erstreckung des Stiftes (8), gemessen von der Achse der Stange (7) bis zum Ende des Stiftes (81), um 0,14 bis 0,26 mm kleiner ist als der halbe Durchmesser des Walzdorns (6).

## Claims

1. Heat exchange pipe (1) having a pipe axis (A), a pipe wall (11) having a pipe outer side (2) and a pipe inner side (3), there being formed on the pipe inner side (3) from the pipe wall (11) axially parallel or helically extending inner ribs (31) having a groove (32) which is located between adjacent inner ribs (31),
- the helical angle (α) of the inner ribs (31) measured relative to the pipe axis (A) is less than or equal to 45°,
- the region of the inner ribs (31) remote from the pipe wall (11) being deformed in regular intervals at one side in an asymmetrical manner substantially in a peripheral direction of the pipe, the deformed material of the inner ribs (31) forming projections (4) above the groove (32), and
- there being located between the groove base (321), the sides of the inner ribs (311) and the projections (4) formed hollow spaces (5) which promote the formation of bubbles, **characterised in that**
- the projections (4) in each case extend over a terminal deformation zone (41) along an inner rib (31),
- and **in that** the shaping of the deformation continuously changes within the deformation zone (41), the deformation being shaped to a greater extent in the centre (411) of the deformation zone (41) than at the edges (412).

2. Heat exchange pipe according to claim 1, **characterised in that**, in the centre (411) of the deformation zone (41), the deformed material of an inner rib (31) touches the inner rib (31) which is adjacent in the peripheral direction.

3. Heat exchange pipe according to claim 2, **characterised in that**, in the centre (411) of the deformation zone (41), the deformed material touches the groove base (321) between the inner ribs (31) and the adjacent inner rib (31) in the peripheral direction, whereby the groove (32) between adjacent inner ribs (31) is partially closed.

4. Heat exchange pipe according to any one of claims 1 to 3, **characterised in that** adjacent projections (4) of the inner ribs (31) in a helical circumferential direction do not touch or overlap each other.

5. Heat exchange pipe according to any one of claims 1 to 4, **characterised in that**, at the pipe outer side (2), helically extending, integrally formed outer ribs (21) are formed.

6. Method for producing a heat exchange pipe (1) according to claim 5, having helically extending integral outer ribs (21) on the pipe outer side (2) and, on the pipe inner side (3), integral inner ribs (31) which extend in an axially parallel or helical manner and whose region remote from the pipe wall (11) is deformed at regular intervals at one side in an asymmetrical manner in the peripheral direction of the pipe, **characterised by** the following method steps:
a) on the pipe outer side (2) of a smooth pipe, helically extending outer ribs (21) are formed by the rib material being obtained by urging material from the pipe wall (11) by means of a rolling step, and the ribbed pipe produced being caused to rotate by the rolling forces and being pushed forwards in accordance with the ribs being produced, the outer ribs (21) being formed with increasing height from the otherwise undeformed smooth pipe,
b) the pipe wall (11) is supported in the region in which the outer ribs (21) are formed by a roller mandrel (6) which is located in the pipe and which is rotatably supported on a mandrel rod (7) and which has at the mandrel outer face (61) thereof axially parallel or helical grooves (611), axially parallel or helical inner ribs (31) being formed,
c) the region of the inner ribs (31) remote from the pipe wall (11) is deformed by means of at least one non-rotatable pin (8) which is downstream of the roller mandrel (6) at regular intervals in an asymmetrical manner substantially in the peripheral direction of the pipe, the deformed material of the inner ribs (31) being displaced in such a manner that it forms projections (4) above the groove (32) between two adjacent inner ribs (31).

7. Method for producing a heat exchange pipe according to claim 6, **characterised in that** the end (81) of the pin (8) has a rounded contour.

8. Method for producing a heat exchange pipe according to claim 7, **characterised in that** the end (81) of the pin (8) is in the form of a hemisphere.

9. Method for producing a heat exchange pipe according to any one of claims 6 to 8, **characterised in that** the radial extent of the pin (8), measured from the axis of the rod (7) to the end of the pin (81), is at a maximum as large as half the diameter of the roller mandrel (6).

10. Method for producing a heat exchange pipe according to any one of claims 6 to 9, **characterised in that** the radial extent of the pin (8), measured from the axis of the rod (7) to the end of the pin (81), is smaller by from 35% to 65% of the height of the undeformed inner ribs than half the diameter of the roller mandrel (6).

11. Method for producing a heat exchange pipe according to claim 10, **characterised in that** the radial extent of the pin (8), measured from the axis of the rod (7) to the end of the pin (81), is smaller by from 0.14 to 0.26 mm than half the diameter of the roller mandrel (6).

## Revendications

1. Tube de dispositif de transfert de chaleur (1), comprenant un axe de tube (A), une paroi de tube (11) avec un côté extérieur de tube (2) et un côté intérieur de tube (3), des nervures intérieures (31) parallèles à l'axe ou en révolution sous forme d'hélice, avec une rainure (32) située entre des nervures intérieures (31) respectivement voisines, étant formées sur le côté intérieur de tube (3), en saillie de la paroi de tube (11), tube
- dans lequel l'angle d'hélice (α) des nervures intérieures (31), mesuré par rapport à l'axe de tube (A), est inférieur ou égal à 45°,
- dans lequel la zone des nervures intérieures (31), éloignée de la paroi de tube (11), est déformée à intervalles réguliers, de manière unilatérale asymétrique, sensiblement dans la direction périphérique du tube, le matériau déformé des nervures intérieures (31) formant des saillies (4) au-dessus de la rainure (32), et
- dans lequel entre le fond de rainure (321), les côtés des nervures intérieures (311) et les saillies (4) ayant été formées, se trouvent des cavités (5), qui favorisent la formation de bulles,
**caractérisé**
- **en ce que** les saillies (4) s'étendent chacune respectivement sur une zone de déformation (41) finie, le long d'une nervure intérieure (31), et
- **en ce qu'**à l'intérieur de la zone de déformation (41), le degré de la déformation varie de manière continue, la déformation étant plus marquée au milieu (411) de la zone de déformation (41) qu'au niveau des bords (412).

2. Tube de dispositif de transfert de chaleur selon la revendication 1, **caractérisé en ce qu'**au milieu (411) de la zone de déformation (41), le matériau déformé d'une nervure intérieure (31) touche la nervure intérieure (31) voisine dans la direction périphérique.

3. Tube de dispositif de transfert de chaleur selon la revendication 2, **caractérisé en ce qu'**au milieu (411) de la zone de déformation (41), le matériau déformé touche le fond de rainure (321) entre les nervures intérieures (31) ainsi que la nervure intérieure (31) voisine dans la direction périphérique, la rainure (32) entre des nervures intérieures (31) voisines étant ainsi fermée par secteurs.

4. Tube de dispositif de transfert de chaleur selon l'une des revendications 1 à 3, **caractérisé en ce que** des saillies (4) voisines, des nervures intérieures (31), ne se touchent ou ne se chevauchent pas dans la direction périphérique en hélice.

5. Tube de dispositif de transfert de chaleur selon l'une des revendications 1 à 4, **caractérisé en ce que** sur le côté extérieur de tube (2) sont réalisées des nervures extérieures (21) formées intégralement avec le tube, et s'étendant en révolution sous forme d'hélice.

6. Procédé de fabrication d'un tube d'échangeur de chaleur (1) selon la revendication 5, comprenant des nervures extérieures (21) réalisées intégralement avec le tube et s'étendant en révolution sous forme d'hélice sur le côté extérieur de tube (2), ainsi que des nervures intérieures (31) réalisées intégralement avec le tube, s'étendant parallèlement à l'axe ou en révolution sous forme d'hélice sur le côté intérieur de tube (3), et dont la zone éloignée de la paroi de tube (11) est déformée à intervalles réguliers, de manière unilatérale asymétrique, dans la direction périphérique du tube, **caractérisé par** les étapes de procédé suivantes :
a) on forme sur le côté extérieur de tube (2) d'un tube lisse, des nervures extérieures (21) s'étendant sous la forme de lignes en hélice, en gagnant le matériau des nervures par refoulement de matière provenant de la paroi de tube (11), au moyen d'une étape de laminage, et le tube nervuré ainsi produit est mis en rotation par les forces de laminage et subit une avance conformément aux nervures qui se forment, les nervures extérieures (21) étant formées avec une hauteur croissante à partir du tube lisse non déformé sinon,
b) on soutient la paroi de tube (11) dans la zone où a lieu le formage des nervures extérieures (21), par un mandrin de laminage (6) placé à l'intérieur du tube, et qui est monté rotatif sur une tige de mandrin (7) et présente sur sa surface extérieure de mandrin (61), des rainures (611) parallèles à l'axe ou en forme d'hélice et conduisant au formage de nervures intérieures (31) parallèles à l'axe ou en forme d'hélice,
c) on déforme la zone des nervures intérieures (31) éloignée de la paroi de tube (11), à intervalles réguliers, de manière unilatérale asymétrique, sensiblement dans la direction périphérique du tube, par au moins un plot (8) non rotatif placé à la suite du mandrin de laminage (6), le matériau déformé des nervures intérieures (31) étant déplacé de manière à former des saillies (4) au-dessus de la rainure (32) entre deux nervures intérieures (31) voisines.

7. Procédé de fabrication d'un tube d'échangeur de chaleur, selon la revendication 6, **caractérisé en ce que** l'extrémité (81) du plot (8) présente un contour arrondi.

8. Procédé de fabrication d'un tube d'échangeur de chaleur, selon la revendication 7, **caractérisé en ce que** l'extrémité (81) du plot (8) présente la forme d'une demi-sphère.

9. Procédé de fabrication d'un tube d'échangeur de chaleur, selon l'une des revendications 6 à 8, **caractérisé en ce que** l'étendue radiale du plot (8), mesurée à partir de l'axe de la tige (7) jusqu'à l'extrémité (81) du plot, est au maximum égale à la moitié du diamètre du mandrin de laminage (6).

10. Procédé de fabrication d'un tube d'échangeur de chaleur, selon l'une des revendications 6 à 9, **caractérisé en ce que** l'étendue radiale du plot (8), mesurée à partir de l'axe de la tige (7) jusqu'à l'extrémité (81) du plot, est plus petite, d'une valeur de 35% à 65% de la hauteur des nervures intérieures non déformées, que le demi-diamètre du mandrin de laminage (6).

11. Procédé de fabrication d'un tube d'échangeur de chaleur, selon la revendication 10, **caractérisé en ce que** l'étendue radiale du plot (8), mesurée à partir de l'axe de la tige (7) jusqu'à l'extrémité (81) du plot, est plus petite, d'une valeur de 0,14 à 0,26 mm, que le demi-diamètre du mandrin de laminage (6).
